# EUROPÄISCHE PATENTANMELDUNG

(11) **EP 2 530 820 A1**
(43) Veröffentlichungstag der Anmeldung: **05.12.2012**
(21) Anmeldenummer: 11168490.8
(22) Anmeldetag: 01.06.2011
(51) Int. Cl.: H02M 7/00, C01B 33/035, H01F 27/34

(54) **Anordnung zum Umrichten von Strom umfassend einen Wechselrichter**

(71) Anmelder: AEG Power Solutions B.V., 1161 AH Zwanenburg (NL)
(72) Erfinder: Wallmeier, Peter, 59556 Lippstadt (DE); Satzer, Alexander, 59494 Soest (DE)
(74) Vertreter: Graefe, Jörg

(57) **Zusammenfassung**

Die Erfindung betrifft eine Anordnung zum Umrichten von Strom
- mit einem Wechselrichter zum Erzeugen von Wechselstrom mit einer Frequenz zwischen 2 bis 250 kHz aus Gleichstrom,
- mit einem Hochstromübertrager zur Übertragung von Wechselstrom von einer Primärseite auf eine Sekundärseite mit einer Nennstromstärke von 300 A bei einer Nennspannung von 0 bis 700 V auf einer Primärseite in Strom mit einer Nennstromstärke von 0 A bis 1500 A bei einer Nennspannung von 0 V bis 100 V auf einer Sekundärseite des Hochstromübertragers und
- mit wenigstens einem Kondensator zum Filtern einer an wenigstens einem Ausgang der Anordnung anliegenden Spannung mit einer Frequenz kleiner als 2 kHz,
- wobei ein erster Anschluss des Ausgangs des Wechselrichters mit einem ersten Anschluss der Primärseite des Hochstromübertragers verbunden ist,
- wobei ein zweiter Anschluss des Ausgangs des Wechselrichters mit einem zweiten Anschluss der Primärseite des Hochstromübertragers verbunden ist,
- wobei in wenigstens einem ersten Zweig ein erster Anschluss der Sekundärseite des Hochstromübertragers mit einem ersten Anschluss des Kondensators und ein zweiter Anschluss des Kondensators zumindest mittelbar mit einem ersten Anschluss des Ausgangs verbunden ist und
- wobei in wenigstens einem zweiten Zweig ein zweiter Anschluss der Sekundärseite des Hochstromübertragers zumindest mittelbar mit einem zweiten Anschluss des Ausgangs verbunden ist, wobei

auf einer ersten Seite des Hochstromübertragers die Anschlüsse der Primärseite aus dem Hochstromübertrager herausgeführt sind und auf einer zweiten Seite des Hochstromübertragers die Anschlüsse der Sekundärseite aus dem Hochstromübertrager herausgeführt sind,
der Wechselrichter auf der ersten Seite des Hochstromübertragers und der wenigstens eine Kondensator auf der zweiten Seite des Hochstromübertragers angeordnet ist und
der wenigstens eine erste Anschluss der Sekundärseite des Hochstromübertragers unmittelbar und ohne Zwischenschaltung einer elektrischen Leitung mit dem ersten Anschluss des wenigstens einen Kondensators verbunden ist.

## Beschreibung

Die vorliegende Erfindung betrifft eine Anordnung zum Umrichten von Strom.

In der Veröffentlichung mit der Nummer EP 2 100 851 A2 einer europäischen Patentanmeldung der Anmelderin der vorliegenden Patentanmeldung ist eine Stromversorgungsanordnung offenbart, die zur Abscheidung von Silizium in einem Reaktor nach dem Siemensverfahren geeignet und eingerichtet ist. Zur Erzeugung einer gleichmäßigen Temperaturverteilung werden die Siliziumdünnstäbe oder Siliziumstäbe, an denen sich das Silizium abscheiden soll, mit einem niederfrequenten mit einer Frequenz von ca. 50 Hz und mit einem mittel- oder hochfrequenten Strom versorgt. Der durch die Stäbe fließende Strom bewirkt eine Erwärmung der Stäbe aufgrund des ohmschen Widerstands derselben. Wenn die Stromdichte über den Querschnitt der Stäbe konstant ist, wird an jeder Stelle des Querschnitts der Stäbe die gleich Energie zugeführt. Über die Außenflächen der Stäbe können die Stäbe Wärme abgeben, weshalb an die Außenflächen angrenzende Bereiche der Stäbe sich dennoch weniger erwärmen als Bereiche im Inneren der Stäbe.

Während der niederfrequente Strom eine über den Querschnitt der Stäbe gleiche Stromdichte bewirkt, bewirkt der mittel- oder hochfrequente Strom durch die Stäbe aufgrund des bekannten Skin-Effekts eine höhere Stromdichte in Außenbereichen der Stäbe. Durch die durch den Skin-Effekt des mittel- oder hochfrequenten Stroms hervorgerufene höhere Stromdichte in den Außenbereichen der Stäbe wird den Stäben eine größere Energie zugeführt als den inneren Bereichen. Dadurch kann der Wärmeverlust über die Außenflächen der Stäbe kompensiert werden. Es ist ebenso möglich, dass der Außenbereich mehr erwärmt wird als die inneren Bereiche.

In der Veröffentlichung mit der Nummer EP 2 100 851 A2 sind verschiedene Möglichkeiten offenbart, wie eine Stromversorgungsanordnung für niederfrequenten Strom und einer Stromversorgungsanordnung für mittelfrequenten Strom verschaltet werden können, um Strom in Siliziumstäbe einzuspeisen. Der Aufbau einer Stromversorgungsanordnung für mittelfrequenten Strom ist in dem Dokument allerdings nicht ausführlich dargestellt.

In der europäischen Patentanmeldung mit der Anmeldenummer 10 150 728.3-2207 der AEG Power Solutions B.V. ist zwar der elektrische Aufbau einer Stromversorgungsanordnung für mittelfrequenten Strom offenbart nicht aber der mechanische Aufbau.

Der elektrische Aufbau könnte wie folgt sein:
Die Anordnung
   - weist einen Wechselrichter zum Erzeugen von Wechselstrom mit einer Frequenz zwischen 2 bis 250 kHz aus Gleichstrom auf,
   - weist einen Hochstromüberträger zur Übertragung von Wechselstrom von einer Primärseite auf eine Sekundärseite mit einer Nennstromstärke von 300 A bei einer Nennspannung von 0 bis 700 V auf einer Primärseite in Strom mit einer Nennstromstärke von 0 A bis 1500 A bei einer Nennspannung von 0 V bis 100 V auf einer Sekundärseite des Hochstromübertragers auf und
   - weist wenigstens einen Kondensator zum Filtern einer an wenigstens einem Ausgang der Anordnung anliegenden Spannung mit einer Frequenz kleiner als 2 kHz auf,
   - wobei ein erster Anschluss des Ausgangs des Wechselrichters mit einem ersten Anschluss der Primärseite des Hochstromübertragers verbunden ist und
   - wobei ein zweiter Anschluss des Ausgangs des Wechselrichters mit einem zweiten Anschluss der Primärseite des Hochstromübertragers verbunden ist.
Der Hochstromübertrager ist über wenigstens zwei Zweige mit dem wenigstens einem Ausgang der Anordnung verbunden,
   - wobei in wenigstens einem ersten Zweig der beiden Zweige ein erster Anschluss der Sekundärseite des Hochstromübertragers mit einem ersten Anschluss des Kondensators und ein zweiter Anschluss des Kondensators zumindest mittelbar mit einem ersten Anschluss des Ausgangs verbunden ist und
   - wobei in wenigstens einem zweiten Zweig der beiden Zweige ein zweiter Anschluss der Sekundärseite des Hochstromübertragers zumindest mittelbar mit einem zweiten Anschluss des Ausgangs verbunden ist.

Der mechanische Aufbau der Stromversorgungsanordnung für mittel- oder hochfrequenten Strom ist aber nicht ohne technische Probleme, die insbesondere durch die hohen Frequenzen und die gleichzeitig hohen Ströme hervorgerufen werden, die von der Stromversorgungsanordnung zur Verfügung gestellt werden sollen. Technische Probleme betrafen insbesondere Anordnungen zum Umrichten des niederfrequenten Netzstroms in den mittel- oder hochfrequenten Ausgangsstrom der Stromversorgungsanordnung. Ein Problem stellte der zwar in den Siliziumstäben erwünschte aber in einer Anordnung zum Umrichten unerwünschte Skin-Effekt und der Proximity-Effekt dar, die die Leitung des Stroms innerhalb der Stromversorgungsanordnung betreffen. Auch elektromagnetische Streuung ist ein Problem, dass mit den mittel- oder hochfrequenten Strömen einhergeht. Lösungen, die den elektrischen Aufbau in einem mechanischen Aufbau möglich machen, sind nicht bekannt und auch nicht ansatzweise beschrieben worden. Es ist daher bisher nicht gelungen, die Idee einer Versorgung von Siliciumstäben in einem Reaktor zur Herstellung von Polysilicium mit mittelfrequentem oder hochfrequentem Strom zu ermöglichen.

Hier setzt die vorliegende Erfindung an.

Der Erfindung liegt das Problem zugrunde, eine bekannte Anordnung zum Umrichten mit dem vorgenannten elektrischen Aufbau so zu gestalten, dass beim Transport des hochfrequenten, hohen Stroms vom Wechselrichter zur Last möglichst wenig unerwünschte Effekte auftreten.

Dieses Problem wird erfindungsgemäß mit einer Anordnung gelöst, bei der
- auf einer ersten Seite des Hochstromübertragers die Anschlüsse der Primärseite aus dem Hochstromübertrager herausgeführt sind und auf einer zweiten Seite des Hochstromübertragers die Anschlüsse der Sekundärseite aus dem Hochstromübertrager herausgeführt sind,
- der Wechselrichter auf der ersten Seite des Hochstromübertragers und der wenigstens eine Kondensator auf der zweiten Seite des Hochstromübertragers angeordnet ist und
- der wenigstens eine erste Anschluss der Sekundärseite des Hochstromübertragers unmittelbar und ohne Zwischenschaltung einer elektrischen Leitung mit dem ersten Anschluss des wenigstens einen Kondensators verbunden ist.

Der Erfindung liegen mehrere Überlegungen zugrunde. Zum ersten sollen die elektrischen Leitungen so kurz wie möglich sein. Allein dadurch lassen sich bei der Leitung des hochfrequenten Stroms auftretende Effekte entscheidend vermindern. Zum zweiten sollen Außenleiter und Neutralleiter so dicht wie möglich zueinander geführt werden, wo sie aus Komponenten der erfindungsgemäßen Anordnung herausgeführt sind und wo sich elektrische Leitungen nicht vermeiden lassen. Und zum dritten sollen die Anschlüsse und elektrischen Leitungen, soweit sie sich nicht vermeiden lassen, eine möglichst große Oberfläche haben, damit trotz des Skin-Effekts ein möglichst großer Querschnitt für die Leitung des elektrischen Stroms zur Verfügung steht.

Die Anschlüsse innerhalb der erfindungsgemäßen Anordnung und am Ausgang der erfindungemäßen Anordnung sowie ggf. elektrische Leitungen innerhalb der erfindungsgemäßen Anordnung haben vorzugsweise einen stromdurchflossenen Querschnitt, dessen äußerer Umfang 0 bis 60 cm lang ist. Vorteilhaft ist ein Verhältnis des Umfangs des stromdurchflossenen Querschnitts zum Nennstrom von 0,04 cm/A. Die Querschnittsfläche kann 1 bis 6 cm² betragen.

Die erste Seite und die zweite Seite des Hochstromübertrages können entgegengesetzt Seiten des Hochstromübertragers sein, zum Beispiel eine obere und eine untere Seite des Hochstromübertragers.

Vorzugsweise haben jeder erste Anschluss auf der Sekundärseite des Hochstromübertragers und der erste Anschluss des Kondensators oder der Kondensatoren ein übereinstimmendes Lochbild, so dass die Anschlüsse mit Schrauben oder ähnlichem mit einander elektrisch und mechanisch verbunden werden können.

Auf einer ersten Seite des Kondensators oder der Kondensatoren einer erfindungsgemäßen Anordnung kann der erste Anschluss herausgeführt sein und auf der zweiten Seite des Kondensator bzw. der Kondensatoren einer erfindungsgemäßen Anordnung kann der zweite Anschluss herausgeführt sein. Die erste Seite und die zweite Seite des Kondensators bzw. der Kondensatoren können entgegengesetzte Seiten des Kondensators bzw. der Kondensatoren sein, zum Beispiel eine obere und eine untere Seite des Kondensators bzw. der Kondensatoren.

Der zweite Anschluss jedes dieser Kondensatoren kann unmittelbar und ohne Zwischenschaltung einer elektrischen Leitung mit einem ersten Schaltkontakt eines ersten Schalters verbunden sein. Ein zweiter Schaltkontakt des ersten Schalters kann einen ersten Kontakt des Ausgangs bilden.

Jeder zweite Anschluss der Sekundärseite des Hochstromübertragers kann über eine elektrische Leitung mit einem ersten Schaltkontakt eines zweiten Schalters verbunden sein. Die elektrische Leitung kann ein Blech, insbesondere ein Kupferblech sein. Alternativ und besonders bevorzugt wird jeder zweite Anschluss der Sekundärseite des Hochstromübertragers unmittelbar und ohne Zwischenschaltung einer elektrischen Leitung mit dem ersten Schaltkontakt des zweiten Schalters verbunden. Ein zweiter Schaltkontakt des zweiten Schalters kann einen zweiten Anschluss des Ausgangs bilden.

Der erste Anschluss der Primärseite des Hochstromübertragers und der zweite Anschluss der Primärseite des Hochstromübertragers sind bevorzugt über je eine als Blech ausgeführte elektrische Leitung mit dem ersten Anschluss bzw. dem zweiten Anschluss des Ausgangs des Wechselrichters verbunden, wobei die Bleche zumindest in einem mittleren Bereich zwischen mit den Anschlüssen der Primärseite oder den Anschlüssen des Ausgangs des Wechselrichters verbundenen Endbereichen der Bleche parallel geführt sind. Die parallel geführten Bereiche der Bleche können einen Abstand haben, der klein ist. Der Abstand ist bevorzugt so klein, wie es zum Beispiel im Hinblick auf eine Gefahr von Überschlägen zwischen den Blechen möglich und/oder zulässig ist.

Ein erster Anschluss eines Eingangs des Wechselrichters und ein zweiter Anschluss des Eingangs des Wechselrichters kann über je eine als Blech ausgeführte elektrische Leitung mit einem ersten Anschluss bzw. einem zweiten Anschluss eines Zwischenkreiskondensators verbunden sein. Auch diese Bleche können zumindest in einem mittleren Bereich zwischen mit den Anschlüssen des Zwischenkreiskondensators oder den Anschlüssen des Ausgangs des Wechselrichters verbundenen Endbereichen der Bleche parallel geführt sein. Die parallel geführten Bereiche der Bleche haben vorzugsweise einen Abstand, der klein ist. Der Abstand ist bevorzugt so klein, wie es zum Beispiel im Hinblick auf eine Gefahr von Überschlägen zwischen den Blechen möglich und/oder zulässig ist.

Der Hochstromübertrager kann ein Transformator mit einem Transformatorkern sein. Auf dem Transformatorkern können zwei Sekundärwicklungen angeordnet sein, die die Sekundärseite des Transformators bilden und die einen entgegengesetzten Wicklungssinn haben. Die Sekundärwicklungen können jeweils einen ersten Anschluss und jeweils einen zweiten Anschluss haben, wobei ein erster Anschluss und ein zweiter Anschluss jeder Sekundärwicklung einen ersten Anschluss und einen zweiten Anschluss der Sekundärseite des Hochstromübertragers bilden, die zusammen einen Ausgang der Sekundärseite des Hochstromübertragers bilden. Die zweiten Anschlüsse können auch zu einem gemeinsamen zweiten Anschluss zusammengefasst sein. Im Betrieb der Anordnung fällt bevorzugt zwischen den ersten Anschlüssen der beiden Ausgänge der Sekundärseite keine Spannung ab.

Bei einer Gestaltung des Transformators mit zwei Ausgängen auf der Sekundärseite, weist die erfindungsgemäße Anordnung vorzugsweise zwei erste Zweige und einen oder zwei zweite Zweige auf.

Der erste Anschluss jedes Ausgangs der Sekundärseite kann über einen ersten Zweig und der zweite Anschluss kann über einen zweiten Zweig mit einem ersten bzw. einem zweiten Ausgang der Anordnung verbunden sein, wobei die Ausgänge der Anordnung in Reihe geschaltet sind und im Betrieb der Anordnung über der Reihenschaltung keine Spannung abfällt.

Eine erfindungemäße Anordnung zum Umrichten kann zusammen mit einer Anordnung zur Versorgung mit einem niederfrequenten Wechselstrom mit einer Frequenz zwischen 40 und 70 Hz Teil einer Stromversorgungseinrichtung sein. Die Anordnung zur Versorgung mit dem niederfrequenten Wechselstrom kann wenigstens einen Ausgang haben, der parallel zu der Reihenschaltung der Ausgänge der Anordnung zum Umrichten angeordnet ist, wobei Anschlüsse des Ausgangs der Anordnung zur Versorgung mit niederfrequentem Wechselstrom mit dem ersten Anschluss eines der Ausgänge der Anordnung zum Umrichten verbunden ist.

Die Stromversorgungseinrichtung kann zum Versorgen eines Reaktors zur Herstellung von Polysilicium durch Dampfabscheidung zum Beispiel nach dem Siemens-Verfahren verwendet werden. Die an die Stromversorgungseinrichtung, insbesondere an die Ausgänge der Vorrichtung zum Umrichten anschließbaren Lasten sind dann Siliciumstäbe oder Siliciumdünnstäbe.

Die Anordnung zur Versorgung mit einem niederfrequenten Strom kann einen Transformator aufweisen, der sekundärseitig mehrere Anzapfungen aufweist. Die Anzapfungen können, bis auf eine, die einen Anschluss für einen sekundärseitigen Neutralleiter bildet, über Wechselstromsteller mit einem ersten Anschluss des Ausgangs der Anordnung zur Versorgung mit dem niederfrequenten Strom verbunden sein. Ein zweiter Anschluss des Ausgangs ist mit dem sekundärseitigen Neutralleiter verbunden.

Die Wechselstromsteller können in Spannungsfolgesteuerung angesteuert werden. Eine solche ist zum Beispiel in dem Lehrbuch "Thyristorised Power Controllers" von G. K. Dubey, S. R. Doradla, A. Joshi und R. M. K. Sinha (ISBN 978-0-85226-190-3) und in verschiedenen Veröffentlichungen der Anmelderin oder mit der Anmelderin verbundnen Unternehmen offenbart.

Ausführungsbeispiele der Erfindung werden unter Bezugnahme auf die beiliegenden Figuren beschrieben. Es zeigt
- Fig. 1: schematisch den Aufbau eines ersten Teils einer Vorrichtung zum Umrichten,
- Fig. 2: schematisch den Aufbau eines ersten Ausführungsbeispiels eines zweiten Teils einer Vorrichtung zum Umrichten,
- Fig. 3: schematisch den Aufbau eines zweiten Ausführungsbeispiels eines zweiten Teils einer Vorrichtung zum Umrichten und
- Fig. 4: schematisch den Aufbau eines dritten Ausführungsbeispiels eines zweiten Teils einer Vorrichtung zum Umrichten

Die in den Figuren dargestellten Beispiele für den Aufbau von Teilen einer erfindungsgemäßen Anordnungen geben schematisch die Anordnung der verschiedenen Komponenten der Anordnung und deren elektrische Verbindung wieder. Nicht dargestellt sind die mechanischen Verbindungen der Komponenten zu einem Schaltschrank oder Teilen eines Schaltschranks, zum Beispiel zu einem Gestell des Schaltschranks.

Der innere Aufbau der Komponenten ist ebenso wenig dargestellt, aber zum Teil durch der Funktion entsprechende Symbole angedeutet.

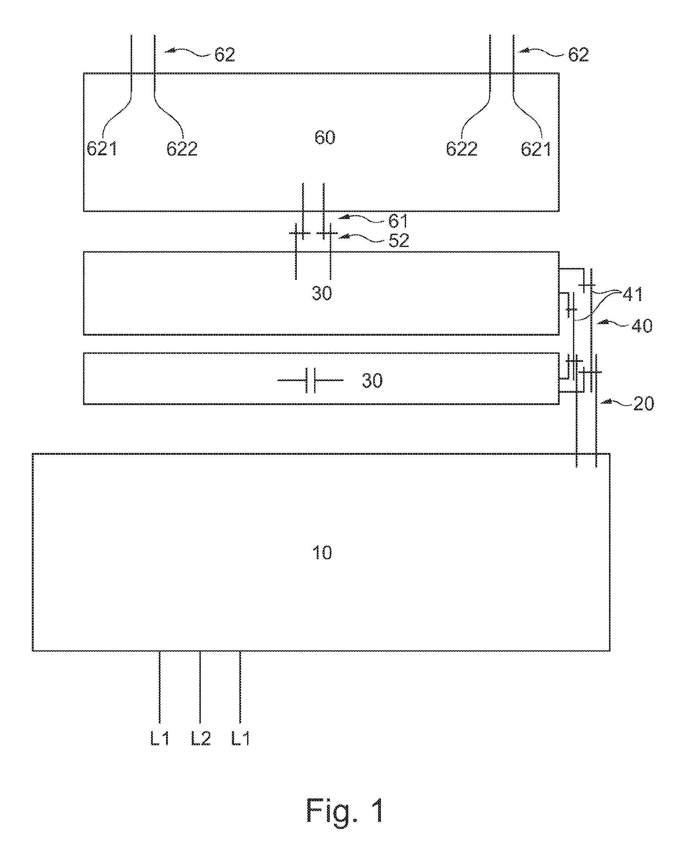

In der Figur 1 ist mit 10 ein Gleichrichter bezeichnet, der aus dem dreiphasigen Versorgungsnetz L1 , L2, L3 Strom entnimmt und diesen gleichrichtet. Bei dem Gleichrichter 10 kann es sich um einen Dreiphasen-Gleichrichter bekannter Bauart handeln, zum Beispiel um eine B6C-Schaltung. Die Anschlüsse eines Ausgangs des die schematisch senkrecht zur Zeichnungsebene hintereinander liegend angeordnet und zueinander und zum Ausgang des Gleichrichters elektrisch parallel geschaltet sind.

Die Zwischenkreiskondensatoren 30 sind ebenfalls parallel zu einem Eingang eines Wechselrichters 50 geschaltet. Dazu sind Anschlüsse der Zwischenkreiskondensatoren 30 und Anschlüsse des Eingangs des Wechselrichters 50 über elektrische Leitungen 40 verbunden. Die elektrischen Leitungen 40 zwischen den Anschlüssen der Zwischenkreiskondensatoren 30 und den Anschlüssen des Eingangs des Wechselrichters 50 sind als Bleche 41, vorzugsweise Kupferbleche ausgeführt.

Im Zwischenkreis liegt im Grunde genommen die von dem Gleichrichter 10 erzeugte Gleichspannung vor, die allerdings von einer vom Wechselrichter 50 durchschlagenden, hochfrequenten Wechselspannung überlagert wird. Die hochfrequente Wechselspannung wird über die Zwischenkreiskondensatoren 30 kurzgeschlossen und liegt daher nicht am Ausgang des Gleichrichters 10 an. Die elektrischen Leitungen 20 zwischen dem Gleichrichter 10 und den Zwischenkreiskondensatoren 30 müssen daher nicht für einen hochfrequenten Strom ausgelegt sein, wohl aber die elektrischen Leitungen 40 zwischen den Zwischenkreiskondensatoren 30 und dem Eingang des Wechselrichters 50.

Die beiden den Strom zwischen den Zwischenkreiskondensatoren 30 und dem Eingang des Wechselrichters 50 leitenden Bleche 41 sind parallel geführt und haben einen möglichst geringen Abstand zueinander.

Der Wechselrichter 50 ist ein bekannter Wechselrichter, zum Beispiel ein Ein-Phasen-Vollbrücken-Wechselrichter, einen Reihenschwingkreiswechselrichter oder ein Pulswechselrichter, an dessen Ausgang 52 eine hochfrequente Wechselspannung anliegt.

Der Ausgang 52 des Wechselrichters 50 ist unmittelbar und ohne Zwischenschaltung einer elektrischen Leitung mit einem Eingang 61 eines Transformators 60 verbunden. Der Transformator hat zwei Ausgänge 62 auf der Sekundärseite. Mit dem Transformator 60 kann zum einen die Spannung bzw. der Strom transformiert werden. Zum anderen können an den Ausgängen zwei gegenphasige Wechselspannungen mit gleichen Effektivspannungen bereitgestellt werden. Dieses wird durch gegensinnig gewickelte Sekundärwicklungen erreicht, die vom gleichen magnetischen Fluss durchflutet werden. Die Ausgänge 62 weisen jeweils einen ersten Anschluss 621 für einen Außenleiter und einen zweiten Anschluss 622 für einen Neutralleiter auf. Die zweiten Anschlüsse 622 sind innerhalb oder außerhalb des Transformators 60 miteinander verbunden (nicht dargestellt) und bilden sekundärseitig einen Neutralleiter eines sekundärseitigen Zwei-Phasen-Wechselstromsystems mit einer Phasenverschiebung von 180° zwischen den Strangspannungen. Die beiden ersten Anschlüsse 621 bilden Außenleiter des Zwei-Phasen-Wechselstromsystems. Zwischen den beiden ersten Anschlüssen 621 fällt keine Spannung ab, d.h. die Leiterspannung ist null.

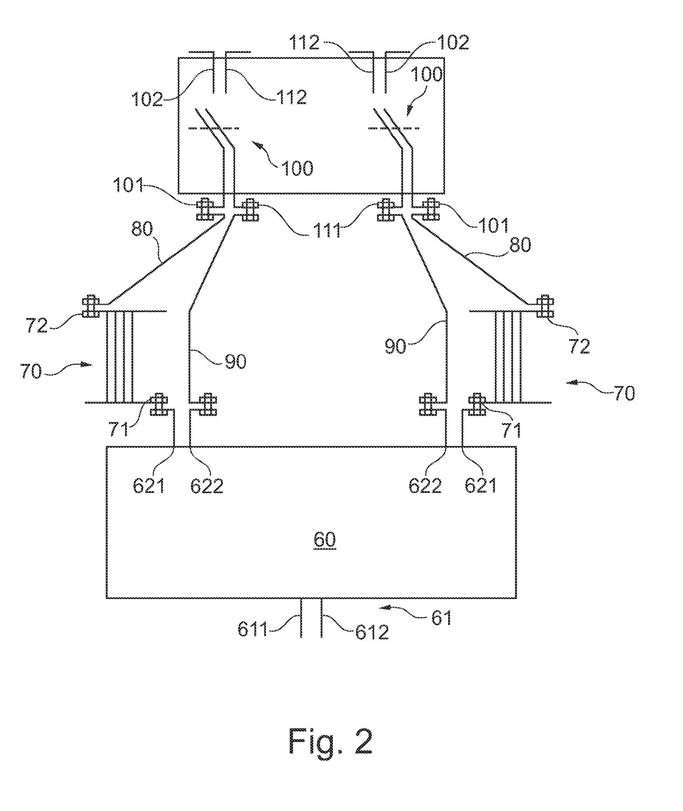

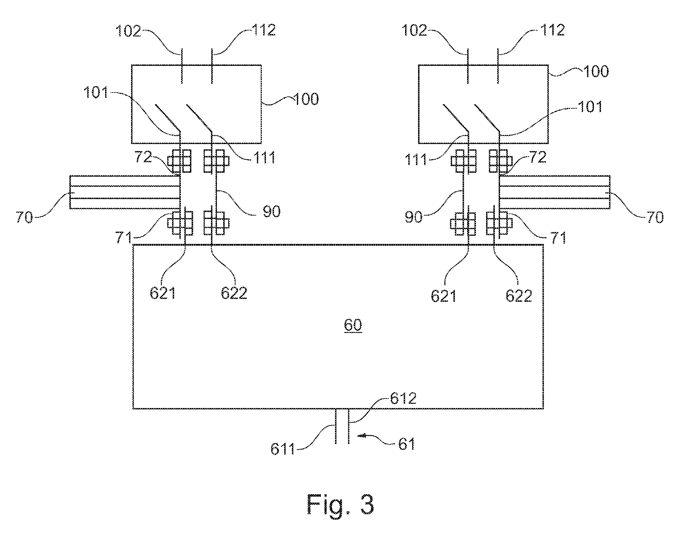

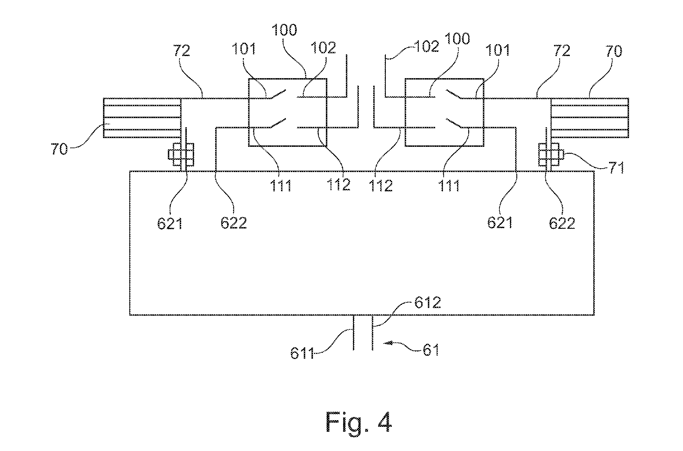

Die ersten Anschlüsse 621 der Ausgänge 62 des Transformators 60 sind mit unmittelbar und ohne Zwischenschaltung einer elektrischen Leitung jeweils mit einem ersten Anschluss 71 eines Kondensators 70 verbunden. Zweite Anschlüsse 72 der Kondensatoren 70 sind entweder unter Zwischenschaltung einer elektrischen Leitung 80 (Fig. 2) oder unmittelbar und ohne Zwischenschaltung einer elektrischen Leitung (Fig. 3, Fig. 4) mit je einem ersten Kontakt 101 eines von zwei ersten Schaltern 100 verbunden.

Die ersten Schalter 100 weisen je einen zweiten Kontakt 102 auf, die die ersten Anschlüsse der beiden Ausgänge der erfindungsgemäßen Anordnung bilden. Der erste Kontakt 101 und der zweite Kontakt 102 eines ersten Schalters 100 können durch Schalten miteinander elektrisch verbunden werden.

Die zweiten Anschlüsse 622 der Ausgänge 62 des Transformators 60 sind entweder unter Zwischenschaltung einer elektrischen Leitung 90 (Fig. 2, Fig. 3) oder unmittelbar und ohne Zwischenschaltung einer elektrischen Leitung (Fig. 4) mit je einem ersten Kontakt 111 eines zweiten Schalters 110 verbunden.

Die zweiten Schalter 110 weisen zweite Kontakte 112 auf, die einen zweiten Anschluss eines Ausgangs der erfindungsgemäßen Anordnung bilden. Auch der erste Kontakt 111 und der zweite Kontakt 112 eines zweiten Schalters 110 können durch Schalten miteinander elektrisch verbunden werden.

## Patentansprüche

1. Anordnung zum Umrichten von Strom
- mit einem Wechselrichter (50) zum Erzeugen von Wechselstrom mit einer Frequenz zwischen 2 bis 250 kHz aus Gleichstrom,
- mit einem Hochstromübertrager (60) zur Übertragung von Wechselstrom von einer Primärseite auf eine Sekundärseite mit einer Nennstromstärke von 300 A bei einer Nennspannung von 0 bis 700 V auf der Primärseite in Strom mit einer Nennstromstärke von 0 A bis 1500 A bei einer Nennspannung von 0 V bis 100 V auf der Sekundärseite des Hochstromübertragers (60) und
- mit wenigstens einem Kondensator (70) zum Filtern einer an wenigstens einem Ausgang (102, 112) der Anordnung anliegenden Spannung mit einer Frequenz kleiner als 2 kHz,
- wobei ein erster Anschluss des Ausgangs (52) des Wechselrichters (50) mit einem ersten Anschluss der Primärseite des Hochstromübertragers (60) verbunden ist,
- wobei ein zweiter Anschluss des Ausgangs (52) des Wechselrichters mit einem zweiten Anschluss der Primärseite des Hochstromübertragers verbunden ist,
- wobei in wenigstens einem ersten Zweig ein erster Anschluss (621) der Sekundärseite des Hochstromübertragers (60) mit einem ersten Anschluss (71) des Kondensators (70) und ein zweiter Anschluss (72) des Kondensators (70) zumindest mittelbar mit einem ersten Anschluss (102) des Ausgangs (102, 112) verbunden ist und
- wobei in wenigstens einem zweiten Zweig ein zweiter Anschluss (622) der Sekundärseite des Hochstromübertragers (60) zumindest mittelbar mit einem zweiten Anschluss (112) des Ausgangs (102, 112) verbunden ist,
**dadurch gekennzeichnet,**
**dass** auf einer ersten Seite des Hochstromübertragers (60) die Anschlüsse (611, 612) der Primärseite aus dem Hochstromübertrager (60) herausgeführt sind und auf einer zweiten Seite des Hochstromübertragers (60) die Anschlüsse (621, 622) der Sekundärseite aus dem Hochstromübertrager (60) herausgeführt sind,
**dass** der Wechselrichter (50) auf der ersten Seite des Hochstromübertragers (60) und der wenigstens eine Kondensator (70) auf der zweiten Seite des Hochstromübertragers (60) angeordnet ist und
**dass** der wenigstens ein erster Anschluss (621) der Sekundärseite des Hochstromübertragers (60) unmittelbar und ohne Zwischenschaltung einer elektrischen Leitung mit dem ersten Anschluss (71) des wenigstens einen Kondensators (70) verbunden ist.

2. Anordnung nach Anspruch 1, **dadurch gekennzeichnet, dass** auf einer ersten Seite des wenigstens einen Kondensators (70) der erste Anschluss (71) aus dem wenigstens einen Kondensator (70) herausgeführt ist und auf der zweiten Seite des wenigstens einen Kondensators (70) der zweite Anschluss (72) aus dem wenigstens einen Kondensator (70) herausgeführt ist.

3. Anordnung nach Anspruch 2, **dadurch gekennzeichnet, dass** der zweite Anschluss (72) des wenigstens einen Kondensators (70) unmittelbar und ohne Zwischenschaltung einer elektrischen Leitung mit einem ersten Schaltkontakt (101) eines ersten Schalters (101, 102) verbunden ist.

4. Anordnung nach Anspruch 3, **dadurch gekennzeichnet, dass** ein zweiter Schaltkontakt (102) des ersten Schalters (1 01 , 102) einen ersten Kontakt des Ausgangs bildet.

5. Anordnung nach einem der Ansprüche 1 bis 4, **dadurch gekennzeichnet, dass** der zweite Anschluss (622)der Sekundärseite des Hochstromübertragers (60) über eine elektrische Leitung (90) mit einem ersten Schaltkontakt (111) eines zweiten Schalters (1 1 1 , 112) verbunden ist.

6. Anordnung nach Anspruch 5, **dadurch gekennzeichnet, dass** die elektrische Leitung (90) ein Blech, insbesondere ein Kupferblech ist.

7. Anordnung nach Anspruch 5 oder 6, **dadurch gekennzeichnet, dass** ein zweiter Schaltkontakt (112) des zweiten Schalters (111, 112) einen zweiten Anschluss des Ausgangs bildet.

8. Anordnung nach einem der Ansprüche 1 bis 7, **dadurch gekennzeichnet, dass** der erste Anschluss (611) der Primärseite des Hochstromübertragers (60) und der zweite Anschluss (612) der Primärseite des Hochstromübertragers (60) über je eine als Blech ausgeführte elektrische Leitung mit dem ersten Anschluss bzw. dem zweiten Anschluss des Ausgangs des Wechselrichters (50) verbunden ist, wobei die Bleche zumindest in einem mittleren Bereich zwischen mit den Anschlüssen der Primärseite oder den Anschlüssen des Ausgangs des Wechselrichters verbundenen Endbereichen der Bleche parallel geführt sind.

9. Anordnung nach einem der Ansprüche 1 bis 8, **dadurch gekennzeichnet, dass** ein erster Anschluss eines Eingangs des Wechselrichters (50) und ein zweiter Anschluss des Eingangs des Wechselrichters über je eine als Blech (41) ausgeführte elektrische Leitung (40) mit einem ersten Anschluss bzw. einem zweiten Anschluss eines Zwischenkreiskondensators (30) verbunden ist, wobei die Bleche (41) zumindest in einem mittleren Bereich zwischen mit den Anschlüssen des Zwischenkreiskondensators (30) oder den Anschlüssen des Eingangs des Wechselrichters (50) verbundenen Endbereichen der Bleche parallel geführt sind.

10. Anordnung nach einem der Ansprüche 1 bis 9, **dadurch gekennzeichnet, dass** der Hochstromübertrager (60) ein Transformator (60) mit einem Transformatorkern und zwei auf dem Transformatorkern angeordneten Sekundärwicklungen ist, die einen entgegengesetzten Wicklungssinn haben und jeweils einen ersten Anschluss und einen gemeinsamen zweiten Anschluss haben, wobei einer der ersten Anschlüsse und der zweite Anschluss einen ersten Anschluss (621) und einen zweiten Anschluss (622) eines Ausgangs (62) der Sekundärseite des Transformators (60) bilden und wobei im Betrieb der Anordnung zwischen den ersten Anschlüssen (621) der Ausgänge (62) keine Spannung abfällt.

11. Anordnung nach Anspruch 10, **dadurch gekennzeichnet, dass** der erste Anschluss (621) jedes Ausgangs (62) der Sekundärseite über je einen ersten Zweig und der zweite Anschluss über wenigstens einen zweiten Zweig mit einem ersten bzw. einem zweiten Ausgang der Anordnung verbunden ist, wobei die Ausgänge der Anordnung in Reihe geschaltet sind und im Betrieb der Anordnung über der Reihenschaltung keine Spannung abfällt.

12. Stromversorgungseinrichtung mit einer Anordnung zum Umrichten nach einem der Ansprüche 1 bis 11 und einer Anordnung zur Versorgung mit einem niederfrequenten Wechselstrom mit einer Frequenz zwischen 40 und 70 Hz, die wenigstens einen Ausgang hat, der parallel zu der Reihenschaltung der Ausgänge der Anordnung zum Umrichten angeordnet ist, wobei Anschlüsse des Ausgangs der Anordnung zur Versorgung mit niederfrequentem Wechselstrom mit dem ersten Anschluss eines der Ausgänge der Anordnung zum Umrichten verbunden ist.

## Geänderte Patentansprüche

### Geänderte Patentansprüche gemäss Regel 137(2) EPÜ.

**1.** Anordnung zum Umrichten von Strom
- mit einem Wechselrichter (50) zum Erzeugen von Wechselstrom aus Gleichstrom,
- mit einem Stromübertrager (60) zur Übertragung von Wechselstrom von einer Primärseite auf eine Sekundärseite bei einer Nennspannung von 0 bis 700 V auf der Primärseite in Strom mit einer Nennstromstärke von 0 A bis 1500 A bei einer Nennspannung von 0 V bis 100 V auf der Sekundärseite des Hochstromübertragers (60) und
- mit wenigstens einem Kondensator (70) zum Filtern einer an wenigstens einem Ausgang (102, 112) der Anordnung anliegenden Spannung mit einer Frequenz kleiner als 2 kHz,
- wobei ein erster Anschluss des Ausgangs (52) des Wechselrichters (50) mit einem ersten Anschluss der Primärseite des Stromübertragers (60) verbunden ist,
- wobei ein zweiter Anschluss des Ausgangs (52) des Wechselrichters mit einem zweiten Anschluss der Primärseite des Stromübertragers verbunden ist,
- wobei in wenigstens einem ersten Zweig ein erster Anschluss (621) der Sekundärseite des Stromübertragers (60) mit einem ersten Anschluss (71) des Kondensators (70) und ein zweiter Anschluss (72) des Kondensators (70) zumindest mittelbar mit einem ersten Anschluss (102) des Ausgangs (102, 112) verbunden ist und
- wobei in wenigstens einem zweiten Zweig ein zweiter Anschluss (622) der Sekundärseite des Stromübertragers (60) zumindest mittelbar mit einem zweiten Anschluss (112) des Ausgangs (102, 112) verbunden ist,
- wobei der wenigstens eine erste Anschluss (621) der Sekundärseite des Stromübertragers (60) unmittelbar und ohne Zwischenschaltung einer elektrischen Leitung mit dem ersten Anschluss (71) des wenigstens einen Kondensators (70) verbunden ist,
**dadurch gekennzeichnet,**
**dass** der Wechselrichter zum Erzeugen der Wechselspannung mit einer Frequenz zwischen 2 bis 250 kHz geeignet und eingerichtet ist,
**dass** der Stromübertrager ein Hochstromübertrager zur Übertragung des Wechselstroms von der Primärseite auf die Sekundärseite mit einer Nennstromstärke von 300 A auf der Primärseite ist,
**dass** auf einer ersten Seite des Hochstromübertragers (60) die Anschlüsse (611, 612) der Primärseite aus dem Hochstromübertrager (60) herausgeführt sind und auf einer zweiten Seite des Hochstromübertragers (60) die Anschlüsse (621, 622) der Sekundärseite aus dem Hochstromübertrager (60) herausgeführt sind und
**dass** der Wechselrichter (50) auf der ersten Seite des Hochstromübertragers (60) und der wenigstens eine Kondensator (70) auf der zweiten Seite des Hochstromübertragers (60) angeordnet ist.

**2.** Anordnung nach Anspruch 1 , **dadurch gekennzeichnet, dass** auf einer ersten Seite des wenigstens einen Kondensators (70) der erste Anschluss (71) aus dem wenigstens einen Kondensator (70) herausgeführt ist und auf der zweiten Seite des wenigstens einen Kondensators (70) der zweite Anschluss (72) aus dem wenigstens einen Kondensator (70) herausgeführt ist.

**3.** Anordnung nach Anspruch 2, **dadurch gekennzeichnet, dass** der zweite Anschluss (72) des wenigstens einen Kondensators (70) unmittelbar und ohne Zwischenschaltung einer elektrischen Leitung mit einem ersten Schaltkontakt (101) eines ersten Schalters (101, 102) verbunden ist.

**4.** Anordnung nach Anspruch 3, **dadurch gekennzeichnet, dass** ein zweiter Schaltkontakt (102) des ersten Schalters (101, 102) einen ersten Kontakt des Ausgangs bildet.

**5.** Anordnung nach einem der Ansprüche 1 bis 4, **dadurch gekennzeichnet, dass** der zweite Anschluss (622)der Sekundärseite des Hochstromübertragers (60) über eine elektrische Leitung (90) mit einem ersten Schaltkontakt (111) eines zweiten Schalters (111, 112) verbunden ist.

**6.** Anordnung nach Anspruch 5, **dadurch gekennzeichnet, dass** die elektrische Leitung (90) ein Blech, insbesondere ein Kupferblech ist.

**7.** Anordnung nach Anspruch 5 oder 6, **dadurch gekennzeichnet, dass** ein zweiter Schaltkontakt (112) des zweiten Schalters (111, 112) einen zweiten Anschluss des Ausgangs bildet.

**8.** Anordnung nach einem der Ansprüche 1 bis 7, **dadurch gekennzeichnet, dass** der erste Anschluss (611) der Primärseite des Hochstromübertragers (60) und der zweite Anschluss (612) der Primärseite des Hochstromübertragers (60) über je eine als Blech ausgeführte elektrische Leitung mit dem ersten Anschluss bzw. dem zweiten Anschluss des Ausgangs des Wechselrichters (50) verbunden ist, wobei die Bleche zumindest in einem mittleren Bereich zwischen mit den Anschlüssen der Primärseite oder den Anschlüssen des Ausgangs des Wechselrichters verbundenen Endbereichen der Bleche parallel geführt sind.

**9.** Anordnung nach einem der Ansprüche 1 bis 8, **dadurch gekennzeichnet, dass** ein erster Anschluss eines Eingangs des Wechselrichters (50) und ein zweiter Anschluss des Eingangs des Wechselrichters über je eine als Blech (41) ausgeführte elektrische Leitung (40) mit einem ersten Anschluss bzw. einem zweiten Anschluss eines Zwischenkreiskondensators (30) verbunden ist, wobei die Bleche (41) zumindest in einem mittleren Bereich zwischen mit den Anschlüssen des Zwischenkreiskondensators (30) oder den Anschlüssen des Eingangs des Wechselrichters (50) verbundenen Endbereichen der Bleche parallel geführt sind.

**10.** Anordnung nach einem der Ansprüche 1 bis 9, **dadurch gekennzeichnet, dass** der Hochstromübertrager (60) ein Transformator (60) mit einem Transformatorkern, mit zwei auf dem Transformatorkern angeordneten Sekundärwicklungen und zwei Ausgängen ist, wobei die Sekundärwicklungen einen entgegengesetzten Wicklungssinn haben und jeweils einen ersten Anschluss und einen gemeinsamen zweiten Anschluss haben, wobei jeder der ersten Anschlüsse erste Anschlüsse (621) und der zweite Anschluss einen zweiten Anschluss (622) eines der Ausgänge (62) der Sekundärseite des Transformators (60) bilden und wobei im Betrieb der Anordnung an den Ausgängen (62) zwei gegenphasige Wechselspannungen mit gleichen Effektivspannungen bereitstellbar sind.

**11.** Anordnung nach Anspruch 10, **dadurch gekennzeichnet, dass** der erste Anschluss (621) jedes Ausgangs (62) der Sekundärseite über je einen ersten Zweig und der zweite Anschluss über wenigstens einen zweiten Zweig mit einem ersten bzw. einem zweiten Ausgang der Anordnung verbunden ist, wobei die Ausgänge der Anordnung in Reihe geschaltet sind und im Betrieb der Anordnung an den Ausgängen der Anordnung zwei gegenphasige Wechselspannungen mit gleichen Effektivspannungen bereitstellbar sind.

**12.** Stromversorgungseinrichtung mit einer Anordnung zum Umrichten nach einem der Ansprüche 1 bis 11 und einer Anordnung zur Versorgung mit einem niederfrequenten Wechselstrom mit einer Frequenz zwischen 40 und 70 Hz, die wenigstens einen Ausgang hat, der parallel zu der Reihenschaltung der Ausgänge der Anordnung zum Umrichten angeordnet ist, wobei Anschlüsse des Ausgangs der Anordnung zur Versorgung mit niederfrequentem Wechselstrom mit dem ersten Anschluss eines der Ausgänge der Anordnung zum Umrichten verbunden ist.
